(19) Europäisches Patentamt

**European Patent Office**

Office européen des brevets

(11) Veröffentlichungsnummer: **0 007 131**
**B1**

(12)

# EUROPÄISCHE PATENTSCHRIFT

(45) Veröffentlichungstag der Patentschrift:
**24.03.82**

(51) Int. Cl.³: **F 01 N 7/16,** C 03 C 7/02,
C 23 D 5/02, C 23 D 5/10

(21) Anmeldenummer: **79200356.8**

(22) Anmeldetag: **02.07.79**

(54) Emaillierter Schalldämpfer und Verfahren zum Emaillieren desselben.

(30) Priorität: **07.07.78 DE 2829959**
**07.07.78 DE 2829993**

(43) Veröffentlichungstag der Anmeldung:
**23.01.80 Patentblatt 80/2**

(45) Bekanntmachung des Hinweises auf die Patenterteilung:
**24.03.82 Patentblatt 82/12**

(84) Benannte Vertragsstaaten:
**AT BE CH DE FR GB IT LU NL SE**

(56) Entgegenhaltungen:
**DE-A-2 218 319**
**DE-A-2 300 448**
**DE-A-2 538 342**
**DE-A-2 654 697**
**US-A-2 898 236**
**US-A-2 900 276**
**US-A-2 977 251**
**US-A-3 203 815**

(73) Patentinhaber: **Reimbold & Strick GmbH & Co. KG,**
**Kunftstrasse 4, D-5000 Köln 91 (DE)**

(72) Erfinder: **Wratil, Josef, Dr., Am Fürstenbrünnchen 2,**
**D-5060 Bergisch-Gladbach 2 (DE)**

(74) Vertreter: **Eggert, Hans-Gunther, Dr.,**
**Raederscheidtstrasse 1, D-5000 Köln 41 (DE)**

ACTORUM AG.

## Emaillierter Schalldämpfer und Verfahren zum Emaillieren desselben

Es ist bekannt, Werkstücke aus temperaturbeständigen Metallen, insbesondere Eisen und Eisenlegierungen, die Verbrennungsgasen bei hoher Temperatur ausgesetzt sind, wie z.B. Brennkammern, Wärmeaustauscher und Abgasanlagen, auch Schalldämpfer zu emaillieren.

Die dafür bisher eingesetzten Emails hatten jedoch mehrere Nachteile. Die Hitzebeständigkeit war unzureichend. Verursacht durch den Wiederaufkocheffekt bildeten sich in der erhitzten Zone Bläschen im Email. Bei Temperaturwechsel traten mechanische Beschädigungen auf. Es gab Haftprobleme an den Schweissnähten. Scharfe Kanten an den Werkstücken, z.B. gestanzte Löcher, blieben unzureichend mit Email beschichtet.

In speziellen Emails konventioneller Zusammensetzung auf Basis von Silikaten, wie z.B. für selbstreinigende Backofenemails oder Emails für Gasheizkamine und Wärmeaustauscher wurde schon Aluminiumpulver verwendet. Der das Aluminiumpulver enthaltende Schlicker solcher Zusammensetzung entwickelte jedoch dauernd Wasserstoff, der das Email schaumig macht und beim Vermahlen des Emails zu Schwierigkeiten führt. Das hat schon zu gefährlichen Knallgasexplosionen bei der Herstellung des Schlickers und dem Aufbringen geführt. Metallisches Silizium verhält sich ähnlich.

Aus der US-PS 3 203 815 sind hochtemperaturbeständige Überzüge für Metalle, insbesondere Eisen und Eisenlegierungen, bekannt, die aus 20 bis 80 Gew.-% Aluminiumpulver, 15 bis 60 Gew.-% Frittenmaterial und 2 bis 17 Gew.-% eines feuerfesten Oxids bestehen. Das Frittenmaterial setzt sich aus 8 bis 13% Aluminiumoxid, 45 bis 55% Boroxid, 8 bis 13% Natriumoxid, 3 bis 7% Bleioxid, 5 bis 12% Calciumoxid, 5 bis 12% Beriumoxid und 0,5 bis 5% Siliziumdioxid zusammen und soll eine Zweiphasenfritte ergeben. Um ein Blei-Bor-Silikat-Eutektikum von sehr niedriger Schmelztemperatur und verbesserten Benetzungseigenschaften zu bilden, enthält diese Fritte zwingend Blei und eine gewisse Menge Kieselsäure. Manganoxid und Eisenoxid als mögliche temperaturbeständige Oxide würden zu einer völlig unkontrollierten Beeinflussung der Glasphase der Fritte bzw. des Emails führen. Von ihrer Verwendung wird in der Patentschrift abgeraten, weil sie einer Dauerbeanspruchung bei erhöhten Temperaturen nicht gewachsen sind. Offenbar wegen der Unverträglichkeit eines wässrigen Schlickers aus dieser Fritte mit dem Aluminiumpulver wird der Mühlenversatz durch in einem organischen Lösungsmittel gelöste Lackharze gebunden, was aber nur für teure Spezialzwecke, z.B. für Düsentriebwerke, vertretbar ist, für die dieser bekannte Überzug offenbar bestimmt ist.

Die US-PS 2 900 276 beschreibt einen Grundüberzug für Metall der für Deckemaillierungen geeignet sein soll. Der bekannte Grundüberzug besteht aus 20 bis 70 Gewichtsteilen Aluminium in Teilchenform und 70 bis 20 Gewichtsteilen einer temperaturbehandelten Erdalkali-Borat-Fritte, die einen wesentlichen Anteil Boroxid und wenigstens ein Erdalkalioxid enthält.

Ein solches Email ist aber nicht schlagunempfindlich, es lässt sich nicht schweissen und ist einem wiederholten Wechsel von Rotglut und Abschrecken in Wasser nicht gewachsen.

Der Erfindung liegt die Aufgabe zugrunde, Schalldämpfer für Verbrennungsmotoren mit einem Email zu versehen, das genügend hitzebeständig ist, nicht den bekannten «Wiederaufkocheffekt» zeigt, so dass mit diesem Email beschichtete Werkstücke wiederholt auf Rotglut gebracht und anschliessend in kaltem Wasser abgeschreckt werden können, ohne das Haftung, Aussehen und die chemische Beständigkeit des Emails nachteilig beeinflusst werden. Das Email muss ferner weitgehend schlagunempfindlich sein und darf in Verbindung mit Temperaturwechsel keine Risse zeigen. Es muss generell und insbesondere an den Schweissnähten gut haften und scharfe Kanten, z.B. an gestanzten Löchern, sicher abdecken. Schliesslich sollten die mit dem erfindungsgemässen Hochtemperaturemail beschichteten Werkstücke schweissbar sein, ohne dass dabei das Email beschädigt wird oder seine vorteilhaften Eigenschaften verliert. Auch muss das Email eine gute Beständigkeit gegen die Abgase der Verbrennungsmotoren und deren saure Bestandteile aufweisen. Für das Verfahren zur Herstellung der emaillierten Schalldämpfer ist zu fordern, dass der Schlicker ohne Schwierigkeiten hergestellt werden kann und insbesondere zusammen mit Aluminiumoder Siliziumpulver keinen Wasserstoff entwickelt und sich unter üblichen Bedingungen aufbringen und einbringen lässt, was nicht mehr gewährleistet ist, wenn er brennbare organische Bestandteile enthält.

Gegenstand der Erfindung ist demzufolge ein emaillierter Schalldämpfer für Verbrennungsmotoren, der mit einem Email beschichtet ist, in das Aluminiumpulver eingelagert ist und dessen Glasphase die nachstehende Zusammensetzung in Gewichtsprozenten hat:

| Aluminiumoxid | ($Al_2O_3$) | 8 bis 12 |
|---|---|---|
| Bortrioxid | ($B_2O_3$) | 40 bis 60 |
| Natriumoxid | ($Na_2O$) | 6 bis 14 |
| Bleioxid | ($PbO$) | 0 bis 7 |
| Calciumoxid | ($CaO$) | 6 bis 11 |
| Bariumoxid | ($BaO$) | 7 bis 12 |
| Manganoxid | ($MnO$) | 2 bis 6 |
| Kobaltoxid | ($CoO$) | 0 bis 2 |
| Siliziumdioxid | ($SiO_2$) | unter 1 |

Die Fritte (Glasphase) zur Herstellung des Hochtemperaturemails ist chemisch gesehen ein Calcium-, Barium-, Natrium- und Manganborat, welches Aluminiumoxid enthält. Ein wesentlicher Bestandteil der Fritte ist Manganoxid, welches entscheidend zur hohen chemischen Beständigkeit beiträgt. Das ebenfalls im Glas enthaltene Kobaltoxid dient dazu, die Benetzung des Basismaterials, vorwiegend Eisen, aber auch rostfreien Stahl, durch das Email zu erhöhen. Die Glasphase ist bis auf Spuren, die aus den Rohstoffen stammen können, vorzugsweise kieselsäurefrei. In die kieselsäurearme, insbesondere kieselsäurefreie Glasphase sind feinverteilte Feststoffe, insbesondere einer Teilchengrösse unter 100 μm eingelagert, die verschiedene Funktionen haben. Beispiele hierfür sind Aluminiumpulver, Siliziumpulver, Chromoxid, Zirkonsilikat, Kupferoxid und calcinierte Tonerde.

Das Aluminiumpulver verbessert die Haftung, den Kantenumgriff und die Temperaturbeständigkeit des Emails. Der ungewöhnlich hohe Anteil an Bortrioxid in der Fritte (Mutterglasphase) vermeidet die Reaktion des Aluminiumpulvers mit dem Schlicker, sei es während der Vermahlung, sei es während der Verarbeitung des Emails.

Die Zugabe von Chrom(III)-oxid dient dazu, die chemische Beständigkeit positiv zu beeinflussen und die Anfälligkeit der Emaillierung gegen Poren herabzusetzen.

Zirkonsilikat (Zirkonmehl) erhöht die Temperaturwechselbeständigkeit und die Stabilität der Emaillierung bei hohen Temperaturen.

Die Zugabe von Silizium-Metallpulver beeinfluss die Haftung sowie die Oberfläche und Farbe der Emaillierung. Ferner können Schwebemittel, Stellmittel und an sich bekannte brennbeständige Verbindungen, die auch sonst in Email und Keramik zweckentsprechend eingesetzt werden, dem Mühlenversatz angehören.

Die Vermahlung der Bestandteile des Mühlenversatzes erfolgt in der in der Email-Industrie üblichen Weise, wobei die Mahlfeinheit des resultierenden Schlickers und dessen Auftragseigenschaften in bekannter Weise den zu emaillierenden Werkstücken anzupassen sind.

Das Hochtemperatur-Email lässt sich in bekannter Weise auf die Werkstücke aufbringen, wobei Schalldämpfer und andere hohle Werkstücke zweckmässig in den gut durchmischten Schlicker getaucht werden. Der aufgetragene Schlicker kann dann wie üblich angetrocknet und in vorhandenen Emaillierungsöfen bei Temperaturen von 800 bis 950°C und Brennzeiten von 3 bis 30 min eingebrannt werden.

Das erfindungsgemässe Hochtemperaturemail hat für Abgasanlagen von Verbrennungsmotoren, wie Schalldämpfer, folgende Vorteile:

Es zeigt nicht den bekannten Wiederaufkocheffekt. Mit diesem Email beschichtete Werkstücke können wiederholt rotglühend in kaltem Wasser abgeschreckt werden, ohne dass Haftung, Aussehen oder die chemische Beständigkeit nachteilig beeinflusst werden.

Mit dem erfindungsgemässen Hochtemperaturemail beschichtete Werkstücke lassen sich schweissen, ohne dass dabei das Email beschädigt wird oder seine vorteilhaften Eigenschaften verliert. Die Emaillierung ist weitgehend schlagunempfindlich, sie deckt auch die Kanten sicher ab, so dass an diesen Korrosionserscheinungen vermieden werden. Die chemische Beständigkeit, insbesondere die Beständigkeit gegen die Abgase von Verbrennungsmotoren und deren saure Bestandteile ist gut. Temperaturwechsel verursacht keine Risse im Email. Es erfolgt kein Angriff auf das Basismaterial an solchen Fehlstellen.

Beispiel

Aus handelsüblichen Rohstoffen wurde nach Auswiegen und sorgfältigem Mischen bei 1300° eine homogene Schmelze erzeugt und diese in Wasser abgeschreckt. Die nach dem Trocknen erhaltene Fritte hatte folgende oxidische Zusammensetzung in Prozenten:

| | | |
|---|---|---|
| Aluminiumoxid | $Al_2O_3$ | 10 |
| Bortrioxid | $B_2O_3$ | 50 |
| Natriumoxid | $Na_2O$ | 11 |
| Bleioxid | PbO | 5 |
| Calciumoxid | CaO | 9 |
| Bariumoxid | BaO | 10 |
| Manganoxid | MnO | 4 |
| Kobaltoxid | CoO | 1 |

Unter Verwendung dieser Fritte wurde ein Mühlenversatz der nachstehenden Zusammensetzung in Gewichtsteilen hergestellt:

| | |
|---|---|
| Fritte | 40 |
| Aluminiumpulver | 40 |
| Siliziumpulver | 5 |
| Chrom(III)-oxid | 5 |
| Zirkonsilikat | 5 |
| Kupferoxid | 2 |
| Bentonit | 1 |
| Wasser | 75 |

Der durch Vermahlen der Komponenten erhaltene Schlicker wurde in üblicher Weise innen und aussen auf einen Schalldämpfer aufgetragen und in einem üblichen Emaillierofen durch Erhitzen auf 850°C eingebrannt.

**Patentansprüche**

1. Emaillierter Schalldämpfer für Verbrennungsmotoren, dadurch gekennzeichnet, dass er mit einem Email beschichtet ist, in das Aluminiumpulver eingelagert ist und dessen Glasphase die nachstehende Zusammensetzung in Gewichtsprozenten hat:

| | | |
|---|---|---|
| Aluminiumoxid | ($Al_2O_3$) | 8 bis 12 |
| Bortrioxid | ($B_2O_3$) | 40 bis 60 |
| Natriumoxid | ($Na_2O$) | 6 bis 14 |
| Bleioxid | (PbO) | 0 bis 7 |
| Calciumoxid | (CaO) | 6 bis 11 |
| Bariumoxid | (BaO) | 7 bis 12 |
| Manganoxid | (MnO) | 2 bis 6 |
| Kobaltoxid | (CoO) | 0 bis 2 |
| Siliziumdioxid | ($SiO_2$) | unter 1 |

2. Emaillierter Schalldämpfer nach Anspruch 1, dadurch gekennzeichnet, dass die Glasphase kieselsäurefrei ist.

3. Emaillierter Schalldämpfer nach Anspruch 1 oder 2, dadurch gekennzeichnet, dass in die Glasphase zusätzlich noch feinverteiltes metallisches Silizium, Zirkonsilikat, Chrom(III)-oxid und Kupferoxid allein oder im Gemisch eingelagert sind.

4. Verfahren zum Emaillieren von Schalldämpfern, dadurch gekennzeichnet, dass man einen Mühlenversatz der Zusammensetzung in Gewichtsteilen

| Fritte | 30 bis 60 |
|---|---|
| Aluminiumpulver | 5 bis 60 |
| Siliziumpulver | 0 bis 8 |
| Chrom(III)-oxid | 0 bis 10 |
| Zirkonsilikat | 0 bis 10 |
| Kupferoxid | 0 bis 3 |
| Bentonit | 0,5 bis 3 |
| Wasser | 70 bis 80 |

herstellt, wobei die Fritte nachstehende Zusammensetzung in Gewichtsprozenten hat:

| Aluminiumoxid | Al₂O₃ | 8 bis 12 |
|---|---|---|
| Bortrioxid | B₂O₃ | 40 bis 60 |
| Natriumoxid | Na₂O | 6 bis 14 |
| Bleioxid | PbO | 0 bis 7 |
| Calciumoxid | CaO | 6 bis 11 |
| Bariumoxid | BaO | 7 bis 12 |
| Manganoxid | MnO | 2 bis 6 |
| Kobaltoxid | CoO | 0 bis 2 |
| Siliziumdioxid | SiO₂ | unter 1 |

den so erhaltenen Schlicker in an sich bekannter Weise auf die Schalldämpfer aufbringt und diese auf Temperaturen von 800 bis 950° erhitzt.

## Claims

1. Enamelled sound absorber for internal combustion engines, characterized in that it is coated with an enamel, in which aluminium powder is incorporated and the vitreous phase of which has the following composition in percentages by weight:

| Aluminium oxide | (Al₂O₃) | 8 to 12 |
|---|---|---|
| Boron trioxide | (B₂O₃) | 40 to 60 |
| Sodium oxide | (Na₂O) | 6 to 14 |
| Lead oxide | (PbO) | 0 to 7 |
| Calcium oxide | (CaO) | 6 to 11 |
| Barium oxide | (BaO) | 7 to 12 |
| Manganese oxide | (MnO) | 2 to 6 |
| Cobalt oxide | (CoO) | 0 to 2 |
| Silicon dioxide | (SiO₂) | under 1 |

2. Enamelled sound absorber according to claim 1, characterized in that the vitreous phase is free of silicic acid.

3. Enamelled sound absorber according to claim 1 or 2, characterized in that in addition finely divided metallic silicon, zirconium silicate, chromium-(III)-oxide and copper oxide are incorporated individually or as a mixture into the vitreous phase.

4. Method of enamelling sound absorbers, characterized in that a milled mixture is produced having the composition in parts by weight:

| Frit | 30 to 60 |
|---|---|
| Aluminium powder | 5 to 60 |
| Silicon powder | 0 to 8 |
| Chromium-(III)-oxide | 0 to 10 |
| Zirconium silicate | 0 to 10 |
| Copper oxide | 0 to 3 |
| Bentonite | 0.5 to 3 |
| Water | 70 to 80 |

the frit having the following composition in percentages by weight:

| Aluminium oxide | Al₂O₃ | 8 to 12 |
|---|---|---|
| Boric oxide | B₂O₃ | 40 to 60 |
| Sodium oxide | Na₂O | 6 to 14 |
| Lead oxide | PbO | 0 to 7 |
| Calcium oxide | CaO | 6 to 11 |
| Barium oxide | BaO | 7 to 12 |
| Manganese oxide | MnO | 2 to 6 |
| Cobalt oxide | CoO | 0 to 2 |
| Silicon dioxide | SiO₂ | under 1 |

the slip obtained in this way is applied in a known manner to the sound absorber and this is heated to temperatures of 800 to 950°.

## Revendications

1. Pot d'échappement émaillé pour moteurs à combustion, caractérisé en ce qu'il est revêtu d'un émail contenant à l'état occlus de la poudre d'aluminium et dont la phase vitreuse possède la composition ci-après en pour cent en poids:

| alumine | (Al₂O₃) | 8 à 12 |
|---|---|---|
| trioxyde de bore | (B₂O₃) | 40 à 60 |
| oxyde de sodium | (Na₂O) | 6 à 14 |
| oxyde de plomb | (PbO) | 0 à 7 |
| oxyde de calcium | (CaO) | 6 à 11 |
| oxyde de baryum | (BaO) | 7 à 12 |
| oxyde de manganèse | (MnO) | 2 à 6 |
| oxyde de cobalt | (CoO) | 0 à 2 |
| silice | (SiO₂) | moins de 1 |

2. Pot d'échappement émaillé selon la revendication 1, caractérisé en ce que la phase vitreuse est exempte de silice.

3. Pot d'échappement émaillé selon la revendication 1 ou 2, caractérisé en ce que la phase vitreuse contient en outre à l'état occlus et en répartition fine du silicium métallique, du silicate de zirconium, de l'oxyde de chrome-III et de l'oxyde de cuivre isolément ou en mélange.

4. Procédé pour émailler des pots d'échappement, caractérisé en ce que l'on prépare un mélange de broyage à la composition ci-après en parties en poids:

| | |
|---|---|
| fritte | 30 à 60 |
| poudre d'aluminium | 5 à 60 |
| poudre de silicium | 0 à 8 |
| oxyde de chrome-III | 0 à 10 |
| silicate de zirconium | 0 à 10 |
| oxyde de cuivre | 0 à 3 |
| bentonite | 0,5 à 3 |
| eau | 70 à 80 |

la fritte ayant la composition ci-après en pour cent en poids:

| | | |
|---|---|---|
| alumine | $Al_2O_3$ | 8 à 12 |
| trioxyde de bore | $B_2O_3$ | 40 à 60 |
| oxyde de sodium | $Na_2O$ | 6 à 14 |
| oxyde de plomb | $PbO$ | 0 à 7 |
| oxyde de calcium | $CaO$ | 6 à 11 |
| oxyde de baryum | $BaO$ | 7 à 12 |
| oxyde de manganèse | $MnO$ | 2 à 6 |
| oxyde de cobalt | $CoO$ | 0 à 2 |
| silice | $SiO_2$ | moins de 1 |

on applique la barbotine obtenue de manière connue en soi sur les pots d'échappement et on les chauffe à des températures de 800 à 950°C.